# EUROPEAN PATENT SPECIFICATION

(11) **EP 2 549 356 B1**
(45) Date of publication and mention of the grant of the patent: **29.11.2017**
(21) Application number: 12173566.6
(22) Date of filing: 26.06.2012
(51) Int. Cl.: G06F 1/16, E05D 11/10

(54) **Flexible display with cover positioning means**
Flexible Anzeige mit Abdeckungspositionierungsmittel
Affichage souple comportant des supports de positionnement de couverture

(30) Priority: 29.06.2011 US 201113172456
(43) Date of publication of application: 23.01.2013
(73) Proprietor: Samsung Electronics Co., Ltd., Gyeonggi-do 16677 (KR)
(72) Inventor: Hamers, Johannes Cornelis Adriaan, 5616 LZ Eindhoven (NL); Walters, Michael Johannes Anna Maria, 5616 LZ Eindhoven (NL); van den Tillaar, Johannes Hermanus, 5616 LZ Eindhoven (NL)
(74) Representative: HGF Limited

(56) References cited:
- WO-A2-2008/153402
- US-A1- 2006 075 602

## Description

### TECHNICAL FIELD

The present invention generally relates to flexible displays. The present invention, more specifically, relates to flexible displays provided with display covers.

### BACKGROUND

Flexible and especially rollable displays are manufactured on a thin substrate that is also bendable. This enables repeated bending with a small radius -- a requirement for a rollable display. The advantages of a rollable display include: a small volume needed for storing in the closed position, and a lack of glass that makes the display unbreakable and of light weight.

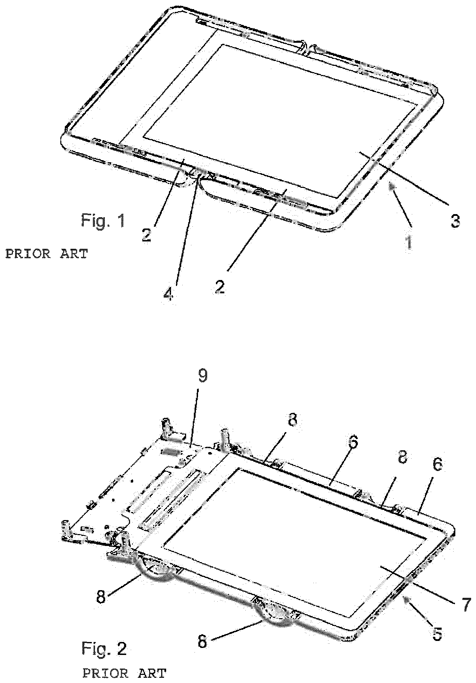

A number of product concepts have been developed for flexible displays. Important concepts are the "book" and the "wrap". The "book" concept of a display system 1, shown in Fig. 1, is the simplest implementation of a rollable display and comprises two display covers 2 with a continuous display 3. In the middle, near the area of a hinge part 4, is a hollow space to accommodate the curved segment of the display 3 in the situation where the "book" is moved from the open to the closed position. The "wrap" concept of a display system 5, shown in Fig. 2, comprises display covers 6, a continuous display 7 and at both sides hinge parts 8, enabling that for closing the covers 6 can be wrapped with its cover front side to the inside. Thus the display 7 is protected when the "wrap" is in the closed position. When moving from the open to the closed position the display makes one complete turn around the device body 9 when wrapped.

In both the "book" and the "wrap" concept for flexible displays, the following main functions are needed in the hinge area of the covers to realize a clear stable open (flat) and closed state of the display system:
1. End stop: a mechanical prevention structure for avoiding reaching an unwanted angle between respective closed display covers and between open (flat) covers.
2. Actuating element: In the prior art this was provided in the form of a spring. Its typical spring type shape will generate a force. When moving to the open (flat) position the covers are forced into an end stop. This gives good user-feedback. Due to the spring, acting at a certain force, this flat position will stay flat, and force is needed to go to the closed position.
3. Hinges: to guard the radius of the bent display part, the position of the hinges is important. They connect the display covers and hinge parts and determine the radius of the display while going to and being in the closed state.

The implementation of the respective positioning elements for these three main functions requires construction space, resulting in larger mechanical borders around the display and a larger product. However, when making the display systems small and pocketable, these positioning elements around the hinge need to be small as well.

WO 2008/153402 discloses an electronic device with a variable angulation of a flexible display.

US 2006/075602 discloses an electronic apparatus having a hinge unit.

### SUMMARY OF THE INVENTION

It is an object of the disclosed device structure to realize a compact solution for the three above-mentioned main functions needed in the hinge area to create a clear open (flat) and closed position of the display system.

According to a first aspect of the present invention, there is provided a display system comprising a flexible display, a support frame comprising two display covers and a hinge part connecting the two display covers hingeable with respect to each other around at least one hinge axis between a stored configuration for fixing the flexible display in a closed storage position and an open planar configuration for fixing the flexible display in a flat open position; and a positioner provided for stably fixing the display covers into the planar configuration, wherein the positioner comprises a first cover end stop at one of the display covers and an actuating element having an actuating part attached to the hinge part and cooperating with the first cover end stop, the hinge part comprises an end stop, and wherein in the planar configuration of the display covers, the actuating part applies a force against the first cover end stop of the one display cover and pushes the first cover end stop against the end stop of the hinge so that the first cover end stop contacts the end stop of the hinge; wherein the first cover end stop is located on an end of the one display cover.

This configuration with actuating element, end stop and hinge in its neighborhood realizes a compact solution for the three main functions needed in the hinge area. Thus the display system can be made more pocketable with a greater design freedom.

According to an exemplary embodiment of the disclosed device, the positioning means (positioners) comprise at least two cover end stops, a first end stop for fixing the display covers in the planar configuration, a second end stop for fixing the display covers in the stored configuration, the actuating part applying a force both in the stored and planar configuration adjacent a cover end stop.

According to another aspect of the disclosed device, the actuating element comprises spring means (spring structure) being combined with end stops, cooperating with the two cover end stops.

Preferably the spring means (spring structure) comprise an elongated spring element having an actuating part at both ends and being integrated with the cover end stops.

According to an exemplary embodiment of the disclosed device, the actuating element comprises a magnet, a wall of the magnet being configured as an actuating part.

### BRIEF DESCRIPTION OF THE DRAWINGS

While the appended claims set forth the features of the present invention with particularity, the invention, together with its objects and advantages, may be best understood from the following detailed description taken in conjunction with the accompanying drawings of which:
Fig. 1 shows a perspective view of a "book" concept of a display system in accordance with an exemplary embodiment;
Fig. 2 shows a perspective view of part of a "wrap" concept of a display system in accordance with an exemplary embodiment;
Fig. 3 shows a cross section (Fig. 3A, 3C) and a cross section and perspective view (Fig. 3B) of an embodiment of positioning elements using spring means in a hinge part of a display system in accordance with an illustrative embodiment;
Fig. 4 shows a perspective view of an embodiment of combined positioning elements in a hinge part in accordance with an illustrative embodiment;
Fig. 5 shows a perspective view of an embodiment of integrated positioning elements in a hinge part of a display system in accordance with an illustrative embodiment;
Fig. 6 shows a perspective view of alternative integrated positioning elements in a hinge part in open and closed position (Fig. 6A, 6B, respectively), of an alternative display system;
Fig. 7 shows a perspective view of alternative integrated positioning elements in a hinge part in closed position (Fig. 7A) and open position (Fig. 7B) of a display system; Fig. 7C is a cross section in the open position;
Fig. 8 shows a perspective view of an alternative arrangement having combined positioning elements using magnetic means in a hinge part in an open position (Fig. 8A), a side view in an open position (Fig. 8B) and a side view in a closed position (Fig. 8C); and
Fig. 9 shows a perspective view of part of a "wrap" concept of an alternative display system with combined positioning elements using magnetic means.

### DETAILED DESCRIPTION OF THE DRAWINGS

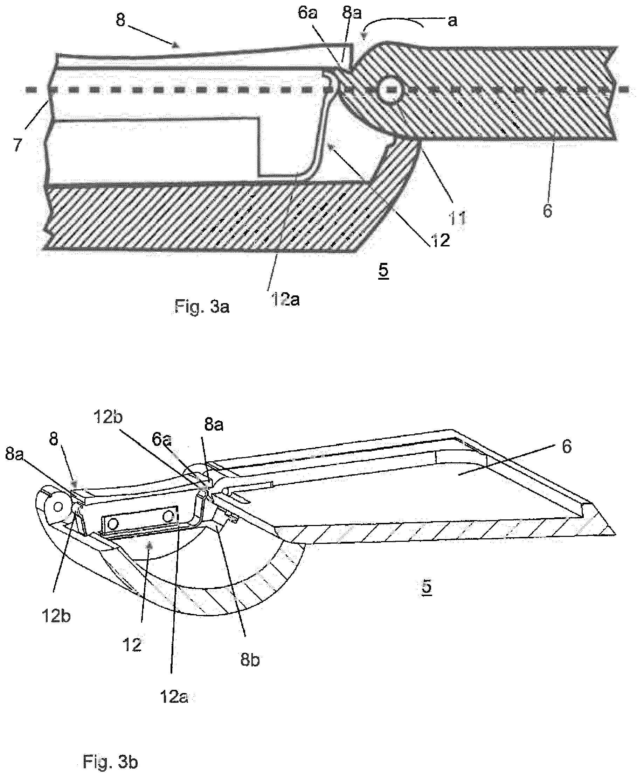

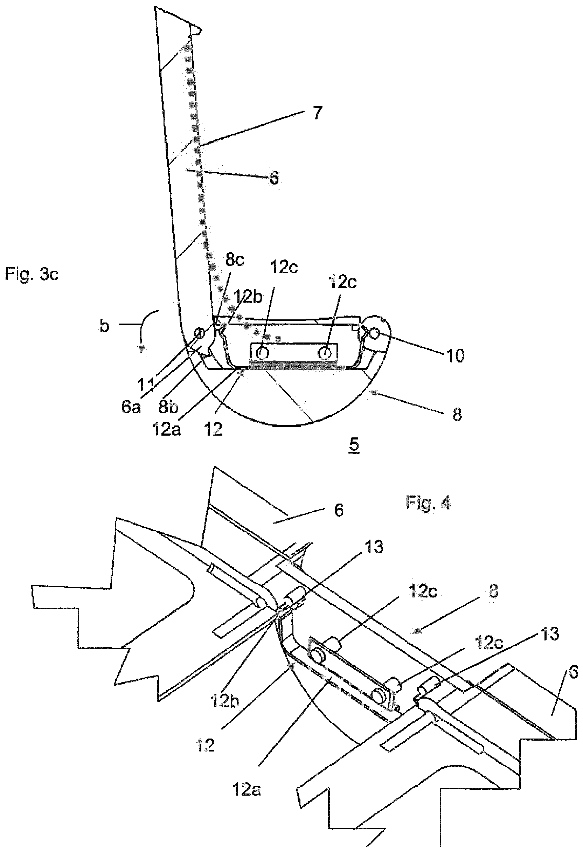

Fig. 3 (including 3a, 3b and 3c) shows the hinge part 8 of the display system 5 of Fig. 2, in a "wrap" embodiment as disclosed in WO 2008/054206 A2 with one of the display covers 6 and (schematically in dotted lines) the continuous flexible display 7, locally supported by the cover 6. The hinge part 8 connects, via hinges 10 and 11, both display covers 6. The cover 6 is hingeable from the open planar configuration with the display in a flat open position, shown in Figs. 3a. 3b in the direction of arrow a to a closed storage position shown in Fig. 3c. The last position, with the cover rotated over an angle of 90 degrees, is shown in Fig, 3c with the display 7 in the region of the hinge part 8 shown with dotted lines. In Fig. 3c the flexible display is curved in a radius, in practice 3 to 10 mm.

The system 5 comprises positioning means (positioners) for a stable fixing of the display covers 6 in the planar configuration, comprising a mechanical cover end stop 6a located on a notch on both covers 6 and an actuating element, formed by a spring 12 attached to the hinge part 8 and end stops 8a, 8b on the hinge part 8, cooperating with the end stop 6a. The spring has an elongated spring element 12a and an actuating part 12b at both ends and is mounted with pins 12c on the hinge part 8. The end stops 6a are designed so that after rotating from the position shown in Fig. 3c, in the direction of arrow b, the hinge part 8 and flat covers 6 will go in the flat open position of Fig. 3a, 3b, each actuating part 12b applying a force adjacent the cover end stop 6a and the hinge 10, 11, and pushing the stop 6a against the end stop 8a. In the closed position of Fig. 3C the end stop 6a is pushed against the end stop 8b. In this position the covers 6 are wrapped and stably located adjacent the body 9. For enlarging the stable closed position of the covers 6, the actuating part 12b of the spring 12 may push against the curved edge of cover, instead of being located at a small distance as shown in Fig.3c.

The above-described embodiment provides a combination of the three desired functions mentioned before; spring, end stop and hinge axis. This solution can be implemented in the described "wrap" concept, and also in the "book" concept of Fig. 1. The dimensions of the parts shown in Figs. 3a, 3b and 3c are in a range of millimeters and are therefore very small. The diameter of the hinge is for instance preferably between 0.6 and 2 mm. Typical material of the cover 6 and hinge part 8 is molded plastic, but a stiffer material can also be used such as, for example, reinforced materials or metal. With this combination of the three main functions, less construction space is required, resulting in a compact design and thus the mechanical borders around the display can be smaller. Another advantage is that there is sufficient space between the hinge parts 8 for the pre-defined curvature of the flexible display in the closed position (Fig. 3c), without obstructions. This is important for extending the lifetime of the display.

In the exemplary embodiment shown in Fig. 4, the hinge part 8 is partly made of metal instead of plastic. The advantage is that metal is much stiffer than plastic. So a thinner construction of the positioning means (positioners) can be made with the same performance as with plastic material, but needing less space than the plastic solution. In the metal plate, pins 13 are assembled for the function of end stop, which also makes the end stops more robust. The spring 12 with spring element 12a and actuating parts 12b is substantially the same spring as in the embodiment of Figs. 3a, 3b and 3c. It is also mounted on pins 12c, assembled in the metal plate.

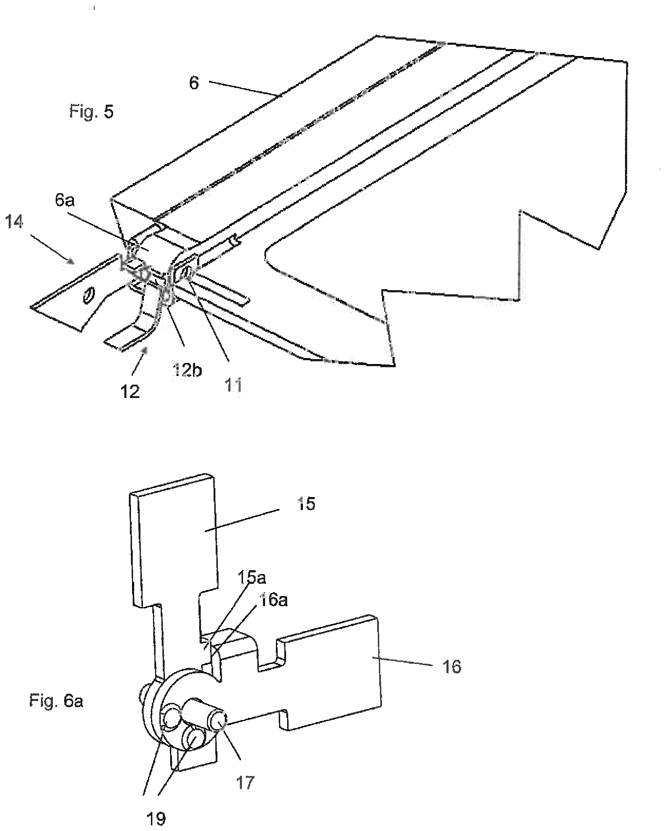

In the exemplary embodiment shown in Fig. 5 all three functions (hinge, end stop and spring function) are combined in one metal part 14. By way of example, this part is mounted in the plastic hinge part 8, but alternatively the parts 8 and 14 can be integrated. This part 14 can be made from a flat sheet of metal with the use of bending and pressing tools. The advantage is that metal is much stiffer than plastic. So a thinner construction of the positioning means can be made with the same performance as with plastic material.

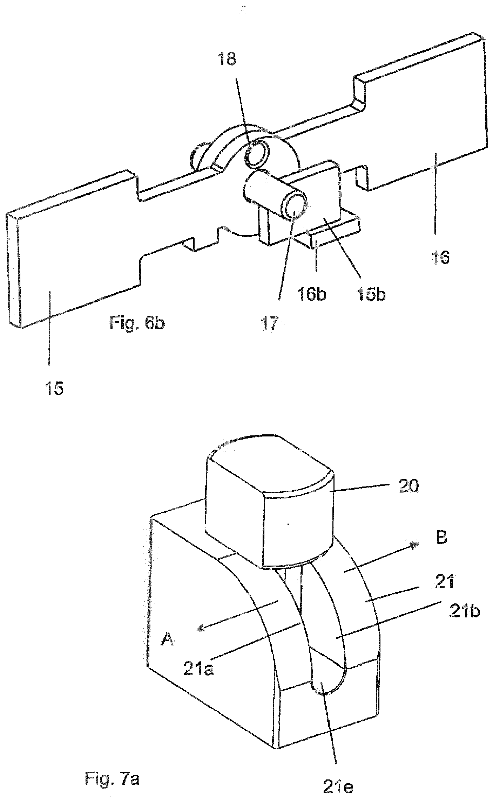

In the alternative device shown in Fig. 6 (including Figs. 6a and 6b), two metal or plastic parts 15, 16 are mounted against each other and can only rotate around the hinge shaft 17. Parts 15, 16 are portions of display covers 2 of the "book" concept, and are portions of walls of display covers 6 and hinge part 8 of the "wrap" concept. A ball point 18 of part 15 (Fig. 6b) will go to the respective ball insert 19 of part 16. In this alternative device the positioning means (positioners) are configured with an actuating element comprising spring means, formed by the cooperating ball point 18 - ball insert 19, being combined with end stops 15a, 15b, cooperating with the two cover end stops 16a and 16b. The parts 15 and 16 have some degree of freedom in a direction parallel to the axis of hinge shaft 17. This is because the parts 15, 16 are flexible and are only elastically deformed. In combination with the end stops 15a, 15b, 16a, 16b a clear 0 and 90 degrees, movement can be made, and therefore clear open and close states are defined. It is noted that in another alternative device (not shown) in addition to the spring means 18, 19 an external coiled spring can be mounted with its windings around the shaft 17, forcing together with the spring means the covers after closing into a flat, compact and stable closed position.

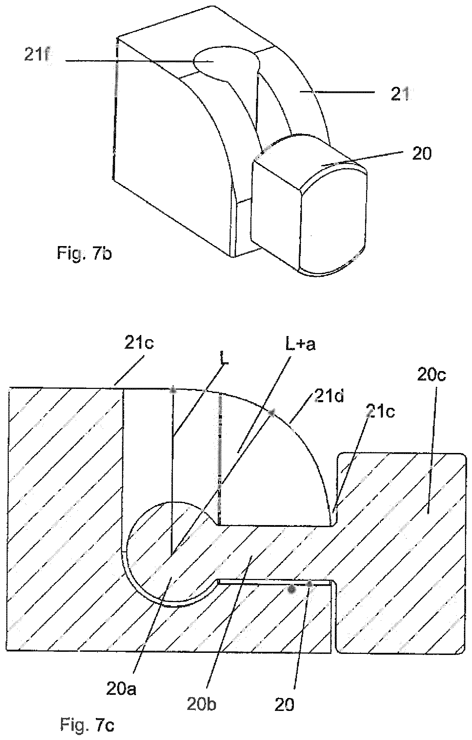

In the alternative device shown in Fig. 7a, 7b parts 20, 21 are co-molded into one assembled combination. The parts connected with the covers 2, are made from plastic. Part 20 comprises a sphere hinge with a sphere 20a, an arm 20b and a slider 20c. The arm is guided between walls 21a, 21b of a guiding slot with end stops 21e and 21f. The spring function between the open and closed movement is realized by bending the walls 21a, 21b of part 21 in a direction parallel to the hinge axis AB in Fig. 7a. Between the end stops 21e, 21f the part 20 can only rotate 90 degrees as shown in Figs. 7a and 7b. When reaching with part 20, the open or close status the part 21 will be forced to the clear status because of the elastic bending or part 21 and going back to its original shape. The deformation is only in the elastic area.

The alternative device shown in Fig. 7c comprises parts that correspond with those shown in Fig.'s 7a, 7b. In this device guide wall 21c for the part 20 with the sphere hinge has in the region at 0 and 90 degrees a dimension "1" that equals the length of the sphere hinge, thus ensuring stable positions. Between 0 and 90 degrees in a region 21d the guide wall 21d has a dimension "1+a" resulting in the sphere 20a to be pulled outside resulting in larger movement force.

In the alternative positioning means, shown in Figs. 6 and 7, the spring means (spring structure), the cover end stops and hinge shafts between the display covers 2 or 6 are integrated into one part, mounted in the hinge support and having small dimensions.

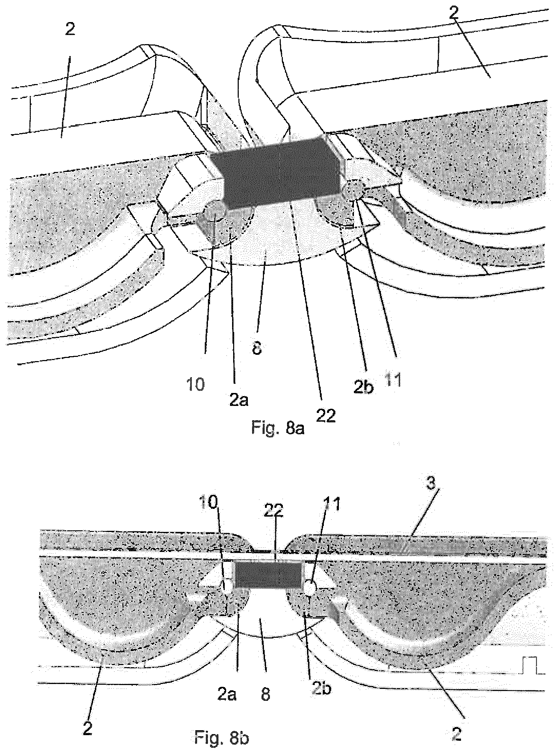

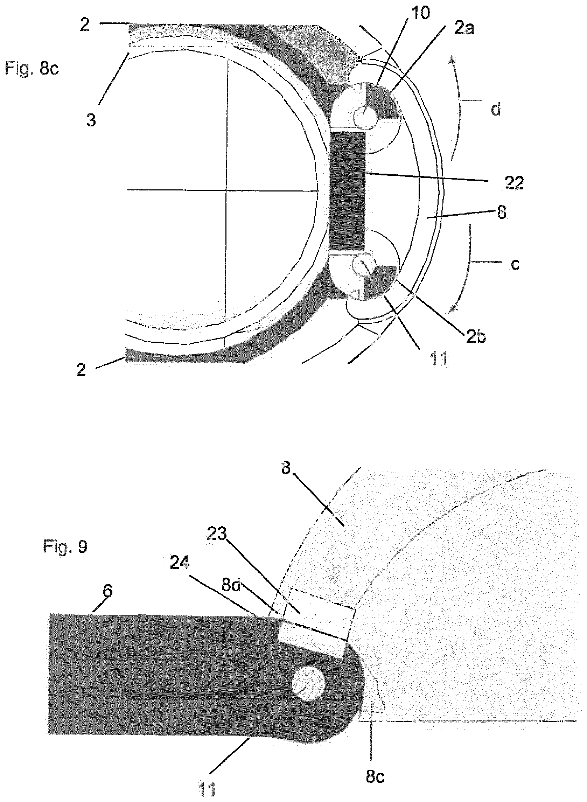

In the alternative device shown in Fig. 8 (including Figs. 8a, 8b and 8c), in the hinge part 8 a magnet 22 is used instead of a spring to ensure the flat (open) status of the covers 2. In Fig. 8 the "book" concept is used for illustration. Since a magnet is used, the area of flat sides of cooperating parts 2a, 2b of the covers 2 must comprise a magnetizable material, like steel. In this positioning means the steel is inserted in the parts 2a, 2b by insert-molding. The magnet 22 is attached to the hinge cover part 8. Now the magnet will pull the flat sided triangular parts 2a to the end stops realizing the open status in which the display 3 is flat. When closing the parts the hinge cover part 8, compared to the flat cover parts, makes a 90 degrees angle. From the open status the parts 2a, 2b are rotatable around the hinges 10, 11 in the direction of arrow c, d respectively to the closed position shown in Fig.8c. In this position the display is curved again in the area between the hinge cover parts 8. Also this alternative provides a combination of the three desired functions mentioned before; spring, end stop and hinge axis.

In the alternative device of Fig. 9 it is shown that the magnet solution of Fig. 8 can also be used in an advantageous way in the "wrap" concept with the combination of the three desired functions mentioned before, spring, end stop and hinge axis. A magnet 23 is attached to the cover part 8 and cooperates with magnetizable material 24 on or in the cover part 6. The magnet 23 and the material 24 constitute end stops. Other end stops are available at portions 8c, 8d of the cover part 8.

It is observed that in the alternative devices of Figs. 8 and 9, in a way not shown, the magnet and the magnetizable material may be mounted reversed (kinematic reversal). It is also observed that that, in a way not shown, instead of a permanent magnet, an electromagnet is applied. The advantage of the electromagnet solution is that opening from the closed position can be done by electrical means.

An advantage of the proposed solutions is that all functions are integrated in the cover parts in a small area. This will give more design freedom when making an apparatus with a rollable display. It can result also in making the apparatus more pocketable, with a small border around the rollable display. An additional advantage is that the proposed solutions can simplify the assembly and provide the possibility to use fewer parts. Another advantage is that there is sufficient space between the hinge parts for a pre-defined curvature of the flexible display in the closed position, a feature that can enhance the lifetime of the display.

The detailed drawings, specific examples and particular formulations given, serve the purpose of illustration only. Furthermore, other substitutions, modifications, changes, and omissions may be made in the design, operating conditions, and arrangement of the exemplary embodiments without departing from the scope of the invention as expressed in the appended claims.

## Claims

1. A display system comprising:
a flexible display;
a support frame comprising two display covers (6) and a hinge part (8) connecting the two display covers (6) hingeable with respect to each other around at least one hinge axis between a stored configuration for fixing the flexible display in a closed storage position and an open planar configuration for fixing the flexible display in a flat open position; and
a positioner provided for stably fixing the display covers (6) into the planar configuration,
wherein
the positioner comprises a first cover end stop (6a) at one of the display covers (6) and an actuating element (12) having an actuating part (12b) attached to the hinge part (8) and cooperating with the first cover end stop (6a),
the hinge part comprises an end stop (8a), and
wherein in the planar configuration of the display covers (6), the actuating part (12b) is configured to apply a force against the first cover end stop (6a) of the one display cover (6) and to push the first cover end stop (6a) against the end stop (8a) of the hinge so that the first cover end stop (6a) contacts the end stop (8a) of the hinge; wherein the first cover end stop (6a) is located on an end of the one display cover (6).

2. The display system of claim 1, wherein the positioner comprises a cover end stop (6a) located on both display covers (6) and said actuating element, formed by a spring (12) attached to the hinge part (8) and end stops (8a, 8b) on the hinge part (8), cooperating with the cover end stops (6a), the spring (12) having an elongated spring element (12a) and the actuating part (12b) at both ends and mounted with pins (12c) on the hinge part (8), the cover end stops (6a) designed so that after rotating to the flat open position of the display covers, each actuating part (12b) applying a force adjacent the cover end stop (6a) and the hinge (10, 11), and when rotating to the closed position, the cover end stop (6a) is pushed against the end stop (8b).

3. A display system in accordance with claim 1 or 2, wherein the positioner comprises a second cover end stop, the first end stop for fixing the display covers into the planar configuration,
the second end stop for fixing the display covers into the stored configuration, and the actuating part applying a force both in the stored and planar configuration adjacent one of the cover end stops.

4. A display system in accordance with claim 3, wherein the hinge part is configured to carry the actuating element and end stops cooperating with the cover end stops.

5. A display system in accordance with any of claims 2 to 4, wherein the actuating element comprises a spring structure being combined with end stops, cooperating with the two cover end stops.

6. A display system in accordance with claim 5, wherein the spring structure comprises an elongated spring element having the actuating part at both ends and being integrated with the cover end stops.

7. A display system in accordance with claim 5 or 6, wherein the spring structure, the end stops and the hinge between the display covers are integrated into one part.

8. A display system in accordance with claim 5 or 6, wherein the spring structure, the cover end stops and hinges between the display covers are integrated into one part, the one part being mounted in the hinge support.

## Patentansprüche

1. Ein Anzeigesystem, das Folgendes umfasst:
eine flexible Anzeige;
einen Trägerrahmen, der zwei Anzeigeabdeckungen (6) und ein Scharnierteil (8) umfasst, das die beiden Anzeigeabdeckungen (6) verbindet, wobei diese in Bezug zueinander schwenkbar sind, wobei dies um mindestens eine Scharnierachse zwischen einer Aufbewahrungsanordnung zur Festsetzung der flexiblen Anzeige in einer geschlossenen Aufbewahrungsposition und einer geöffneten, ebenen Anordnung zur Festsetzung der flexiblen Anzeige in einer flachen, geöffneten Position erfolgt; und
ein Positionierelement zur stabilen Festsetzung der Anzeigeabdeckungen (6) in der ebenen Anordnung,
wobei
das Positionierelement an einer der Anzeigeabdeckungen (6) einen ersten Abdeckungsendanschlag (6a) und ein Betätigungselement (12) umfasst, das ein mit dem Scharnierteil (8) verknüpftes Betätigungsteil (12b) aufweist und mit dem ersten Abdeckungsendanschlag (6a) zusammenwirkt,
das Scharnierteil einen Endanschlag (8a) umfasst, und
wobei das Betätigungsteil (12b) bei einer ebenen Anordnung der Anzeigeabdeckungen (6) eingerichtet ist, um Kraft gegen den ersten Abdeckungsendanschlag (6a) der einen Anzeigeabdeckung (6) auszuüben und den ersten Abdeckungsendanschlag (6a) gegen den Endanschlag (8a) des Scharniers zu drücken, sodass der erste Abdeckungsendanschlag (6a) in Kontakt zum Endanschlag (8a) des Scharniers steht; wobei sich der erste Abdeckungsendanschlag (6a) an einem Ende der einen Anzeigeabdeckung (6) befindet.

2. Das Anzeigesystem nach Anspruch 1, wobei das Positionierelement einen Abdeckungsendanschlag (6a), der sich auf beiden Anzeigeabdeckungen (6) befindet, und das genannte Betätigungselement umfasst, das von einer Feder (12) gebildet wird, die an das Scharnierteil (8) und die Endanschläge (8a, 8b) auf dem Scharnierteil (8) geknüpft ist, wobei diese mit den Abdeckungsendanschlägen (6a) zusammenwirken, wobei die Feder (12) ein langgestrecktes Federelement (12a) aufweist und das Betätigungsteil an beiden Enden mit Pins (12c) auf dem Scharnierteil (8) angebracht ist, wobei die Abdeckungsendanschläge (6a) derart gestaltet sind, dass jedes Betätigungsteil nach dem Drehen in die flache, geöffnete Position eine Kraft neben dem Abdeckungsendanschlag (6a) und dem Scharnier (10, 11) ausübt und der Abdeckungsendanschlag (6a) beim Drehen in die geschlossene Position gegen den Endanschlag (8b) gedrückt wird.

3. Ein Anzeigesystem nach Anspruch 1 oder 2, wobei das Positionierelement einen zweiten Abdeckungsendanschlag, den ersten Endanschlag zur Festsetzung der Anzeigeabdeckungen in die ebene Anordnung, den zweiten Endanschlag zur Festsetzung der Anzeigeabdeckungen in der Aufbewahrungsanordnung und das Betätigungsteil umfasst, das Kraft in sowohl der Aufbewahrungsanordnung als auch der ebenen Anordnung neben einem der Abdeckungsendanschläge ausübt.

4. Ein Anzeigesystem nach Anspruch 3, wobei das Scharnierteil eingerichtet ist, um das Betätigungselement und die Endanschläge zu tragen, die mit den Abdeckungsendanschlägen zusammenwirken.

5. Ein Anzeigesystem nach einem beliebigen der Ansprüche 2 bis 4, wobei das Betätigungselement eine Federstruktur in Kombination mit Endanschlägen umfasst, die mit den beiden Abdeckungsendanschlägen zusammenwirken.

6. Ein Anzeigesystem nach Anspruch 5, wobei die Federstruktur ein langgestrecktes Federelement umfasst, welches das Betätigungsteil an beiden Enden aufweist und mit den Abdeckungsendanschlägen integriert ist.

7. Ein Anzeigesystem nach Anspruch 5 oder 6, wobei die Federstruktur, die Endanschläge und das Scharnier zwischen den Anzeigeabdeckungen in eine Einrichtung integriert sind.

8. Ein Anzeigesystem nach Anspruch 5 oder 6, wobei die Federstruktur, die Endanschläge und das Scharnier zwischen den Anzeigeabdeckungen in eine Einrichtung integriert sind, wobei die Einrichtung im Scharnierträger angebracht ist.

## Revendications

1. Un système d'affichage comprenant :
un écran souple,
un châssis de support comprenant deux couvercles d'écran (6) et une partie charnière (8) raccordant les deux couvercles d'écran (6) articulables l'un par rapport à l'autre autour d'au moins un axe de charnière entre une configuration rangée destinée à la fixation de l'écran souple dans une position de rangement fermée et une configuration plane ouverte destinée à la fixation de l'écran souple dans une position ouverte plane, et
un positionneur fourni de façon à fixer de manière stable les couvercles d'écran (6) dans la configuration plane,
où
les positionneur comprend une première butée d'extrémité de couvercle (6a) au niveau d'un des couvercles d'écran (6) et un élément d'actionnement (12) possédant une partie d'actionnement (12b) rattachée à la partie charnière (8) et coopérant avec la première butée d'extrémité de couvercle (6a),
la partie charnière comprend une butée d'extrémité (8a), et
où, dans la configuration plane des couvercles d'écran (6), la partie d'actionnement (12b) est configurée de façon à appliquer une force contre la première butée d'extrémité de couvercle (6a) dudit couvercle d'écran (6) et à pousser la première butée d'extrémité de couvercle (6a) contre la butée d'extrémité (8a) de la charnière de sorte que la première butée d'extrémité de couvercle (6a) entre en contact avec la butée d'extrémité (8a) de la charnière, où la première butée d'extrémité de couvercle (6a) est placée sur une extrémité dudit couvercle d'écran (6).

2. Le système d'affichage selon la Revendication 1, où le positionneur comprend une butée d'extrémité de couvercle (6a) placée sur les deux couvercles d'écran (6) et ledit élément d'actionnement, formé par un ressort (12) rattaché à la partie charnière (8) et aux butées d'extrémité (8a, 8b) sur la partie charnière (8), coopérant avec les butées d'extrémité de couvercle (6a), le ressort (12) possédant un élément ressort allongé (12a) et la partie d'actionnement (12b) aux deux extrémités et montée avec des goupilles (12c) sur la partie charnière (8), les butées d'extrémité de couvercle (6a) étant conçues de sorte que, après une rotation vers la position ouverte plane des couvercles d'écran, chaque partie d'actionnement (12b) appliquant une force adjacente à la butée d'extrémité de couvercle (6a) et la charnière (10, 11), et en cas de rotation vers la position fermée, la butée d'extrémité de couvercle (6a) est poussée contre la butée d'extrémité (8b).

3. Un système d'affichage selon la Revendication 1 ou 2, où le positionneur comprend une deuxième butée d'extrémité de couvercle, la première butée d'extrémité étant destinée à la fixation des couvercles d'écran dans la configuration plane,
la deuxième butée d'extrémité étant destinée à la fixation des couvercles d'écran dans la configuration rangée, et la partie d'actionnement appliquant un force à la fois dans la configuration rangée et la configuration plane adjacente à une des butées d'extrémité de couvercle.

4. Un système d'affichage selon la Revendication 3, où la partie charnière est configurée de façon à porter l'élément d'actionnement et les butées d'extrémité coopérant avec les butées d'extrémité de couvercle.

5. Un système d'affichage selon l'une quelconque des Revendications 2 à 4, où l'élément d'actionnement comprend une structure à ressort qui est combinée aux butées d'extrémité, coopérant avec les deux butées d'extrémité de couvercle.

6. Un système d'affichage selon la Revendication 5, où la structure à ressort comprend un élément ressort allongé possédant la partie d'actionnement aux deux extrémités et étant d'un seul tenant avec les butées d'extrémité de couvercle.

7. Un système d'affichage selon la Revendication 5 ou 6, où la structure à ressort, les butées d'extrémité et la charnière entre les couvercles d'écran sont d'un seul tenant.

8. Un système d'affichage selon la Revendication 5 ou 6, où la structure à ressort, les butées d'extrémité de couvercle et les charnières entre les couvercles d'écran sont d'un seul tenant, cette partie unique étant montée dans le support à charnière.
